# EUROPEAN PATENT APPLICATION

(11) **EP 3 115 096 A1**
(43) Date of publication of application: **11.01.2017**
(21) Application number: 15758948.2
(22) Date of filing: 02.03.2015
(51) Int. Cl.: B01D 39/20, B01D 46/00, C04B 38/00, F01N 3/022

(54) **HONEYCOMB FILTER**

(30) Priority: 03.03.2014 JP 2014040782
(71) Applicant: Sumitomo Chemical Company, Limited, Tokyo 104-8260 (JP)
(72) Inventor: YOSHINO, Hajime, Niihama-shi Ehime 792-8521 (JP)
(74) Representative: Vossius & Partner Patentanwälte Rechtsanwälte mbB
(86) International application number: PCT/JP2015/056084
(87) International publication number: WO 2015/133435

(57) **Abstract**

A central part of a columnar body in an axis direction parallel to inlet-side flow passages 70Hᵢₙ and outlet-side flow passages 70Hₒᵤₜ includes a first region R₁ where the number of outlet-side flow passages 70Hₒᵤₜ adjacent to each inlet-side flow passage 70Hᵢₙ is Nᵢₒ₁ (Nᵢₒ₁ is any natural number) and a second region R₂ where the number of outlet-side flow passages 70Hₒᵤₜ adjacent to each inlet-side flow passage 70Hᵢₙ is Nᵢₒ₂ (Nᵢₒ₂ is any natural number) and Nᵢₒ₂ ≠ Nᵢₒ₁ is satisfied. The outlet-side flow passage 70Hₒᵤₜ is not adjacent to another outlet-side flow passage 70Hₒᵤₜ, at the first region R₁ and the second region R₂ in the central part of the columnar body in the axis direction.

## Description

### Technical Field

The present invention relates to a honeycomb filter.

### Background Art

Conventionally, there is known a porous ceramic honeycomb filter that is known as a diesel particulate filter or the like. Conventionally, various forms of honeycomb filters have been disclosed as described below.

### Citation List

### Patent Literature

Patent Literature 1: U.S. Patent No. 6673414

### Summary of Invention

### Technical Problem

However, for enhancing thermal shock resistance, the filter is demanded to reduce temperature gradient without causing an excessive rise in pressure loss.

The present invention, which has been made in view of the above problem, provides a honeycomb filter that can reduce temperature gradient without causing an excessive rise in pressure loss.

### Solution to Problem

A honeycomb filter according to the present invention comprises a porous columnar body including an inlet-side end face, an outlet-side end face, a plurality of inlet-side flow passages and a plurality of outlet-side flow passages, the plurality of the inlet-side flow passages including open parts on the inlet-side end face and including closed parts on the outlet-side end face, the plurality of the outlet-side flow passages including open parts on the outlet-side end face and including closed parts on the inlet-side end face.

A central part of the columnar body in an axis direction parallel to the inlet-side flow passage and the outlet-side flow passage includes a first region and a second region, the first region being a region where the number of outlet-side flow passages adjacent to each inlet-side flow passage is Nᵢₒ₁ (Nᵢₒ₁ is any natural number), the second region being a region where the number of outlet-side flow passages adjacent to each inlet-side flow passage is Nᵢₒ₂ (Nᵢₒ₂ is any natural number) and Nᵢₒ₂ ≠ Nᵢₒ₁ is satisfied.

The outlet-side flow passage is not adjacent to another outlet-side flow passage, at the first region and the second region in the central part of the columnar body in the axis direction.

According to the present invention, since the first region and the second region that are different from each other in the arrangement relation of the outlet-side flow passage relative to the inlet-side flow passage are included, it is possible to differentiate the pressure loss at the time of gas passing, between the first region and the second region. Accordingly, it is possible to control the flowing way of gas and the deposition condition of particles, for each location. Further, since the outlet-side flow passages are not adjacent to each other at the first region and the second region, partition walls forming the outlet-side flow passages can effectively function as filtration walls.

Here, it is possible that, when an inter-centroid distance between a centroid of an open part shape of the outlet-side flow passage and a centroid of an open part shape of a closest other outlet-side flow passage to the outlet-side flow passage is P1 and an inter-centroid distance between the centroid of the open part shape of the outlet-side flow passage and a centroid of an open part shape of a second-closest other outlet-side flow passage to the outlet-side flow passage is P2, P2 / P1 is less than 2, at each of the first region and the second region on the outlet-side end face.

Further, it is possible that the total number of the inlet-side flow passages / the total number of the outlet-side flow passages is greater than 1, at each of the first region and the second region.

Further, it is possible that a shape of at least any one of cross-sections of the inlet-side flow passage and the outlet-side flow passage is a regular hexagon, at each of the first region and the second region in the central part of the columnar body in the axis direction, the cross-sections being perpendicular to the axis.

Further, it is possible that each of the first region and the second region does not include a flow passage that is closed on both of the inlet-side end face and the outlet-side end face.

Further, it is possible that an area of a cross-section of a region resulting from adding the first region and the second region occupies 80% or greater of a total cross-section area of the honeycomb filter, the cross-section being perpendicular to the axis.

Further, it is possible that the closed parts of the inlet-side flow passage and the outlet-side flow passage each include column-shaped bodies that are plugged into the flow passages.

Further, it is possible that cross-section areas of the open parts of the inlet-side flow passage and the outlet-side flow passage on both end faces of the columnar body each are greater compared to cross-section areas in the axis-directional central part.

Further, it is possible that the first region contains a central axis of the columnar body, and the second region surrounds the first region, the central axis being parallel to the inlet-side flow passage and the outlet-side flow passage.

### Advantageous Effects of Invention

According to the present invention, it is possible to reduce temperature gradient without causing an excessive rise in pressure loss.

### Brief Description of Drawings

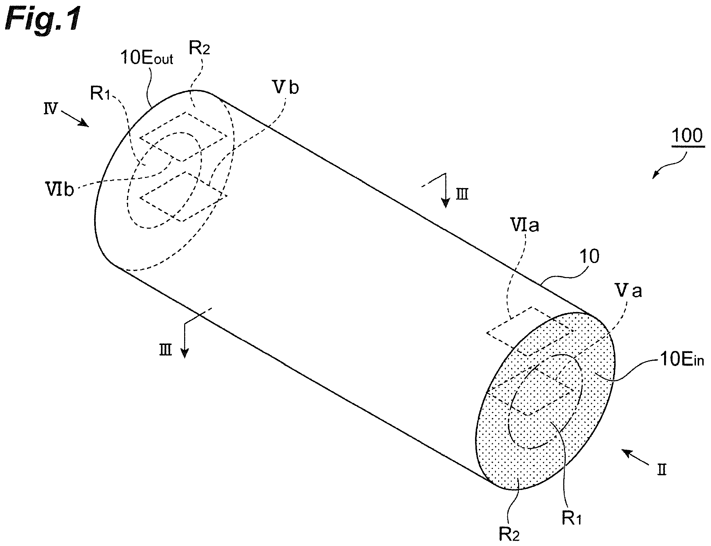

[Figure 1] Figure 1 is a perspective view of a honeycomb filter according to a first embodiment.

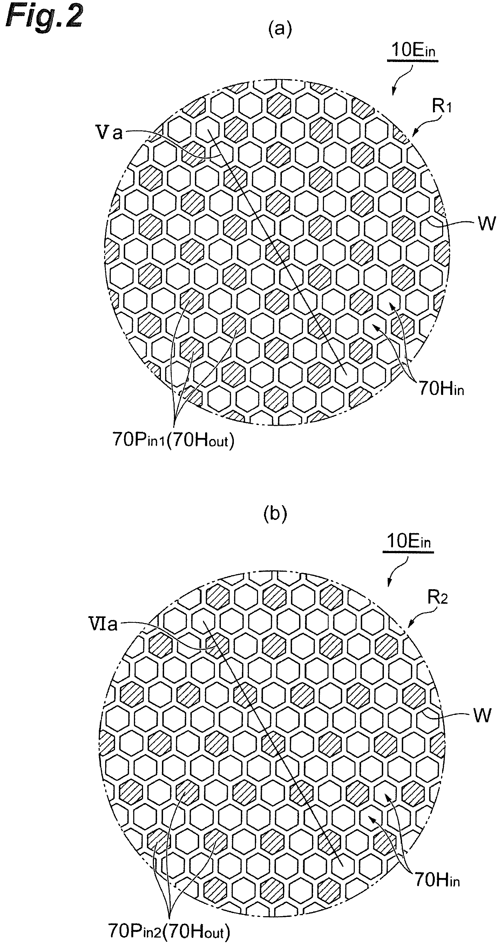

[Figure 2] The (a) of Figure 2 is a diagram of an inlet-side end face of a central part (first region R₁) of the honeycomb filter in Figure 1, and the (b) of Figure 2 is a diagram of an inlet-side end face of a peripheral part (second region R₂) of the honeycomb filter in Figure 1.

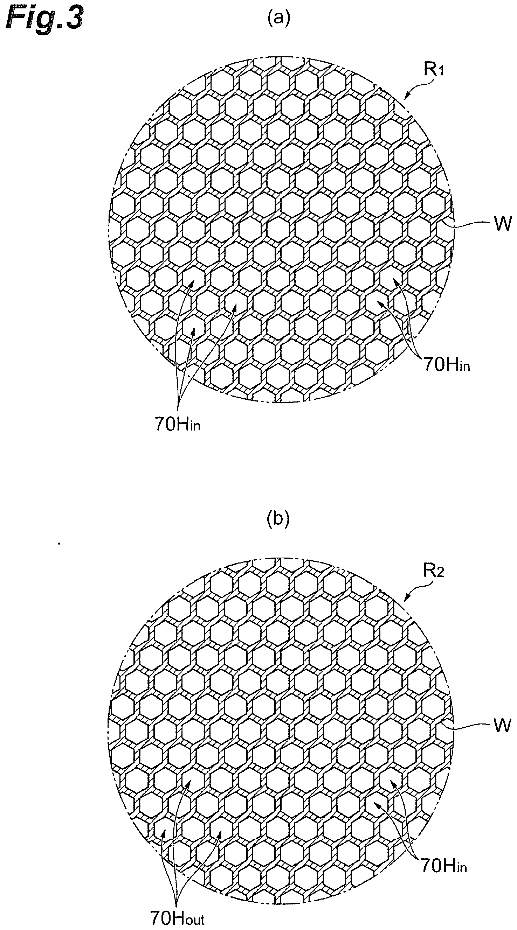

[Figure 3] The (a) of Figure 3 is a III-III cross-section view of an axis-directional central part of the central part (first region R₁) of the honeycomb filter in Figure 1, and the (b) of Figure 3 is a III-III cross-section view of an axis-directional central part of the peripheral part (second region R₂) of the honeycomb filter in Figure 1.

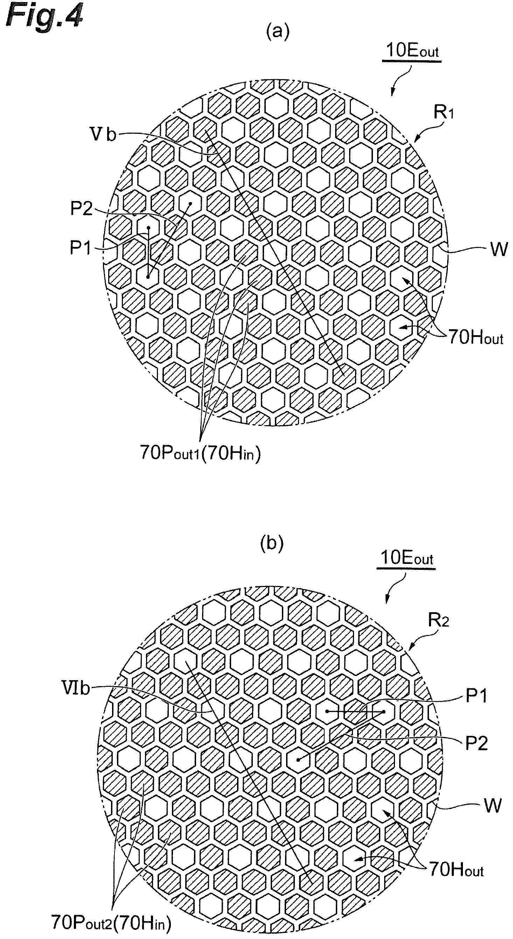

[Figure 4] The (a) of Figure 4 is a diagram of an outlet-side end face of the central part (first region R₁) of the honeycomb filter in Figure 1, and the (b) of Figure 4 is a diagram of an outlet-side end face of the peripheral part (second region R₂) of the honeycomb filter in Figure 1.

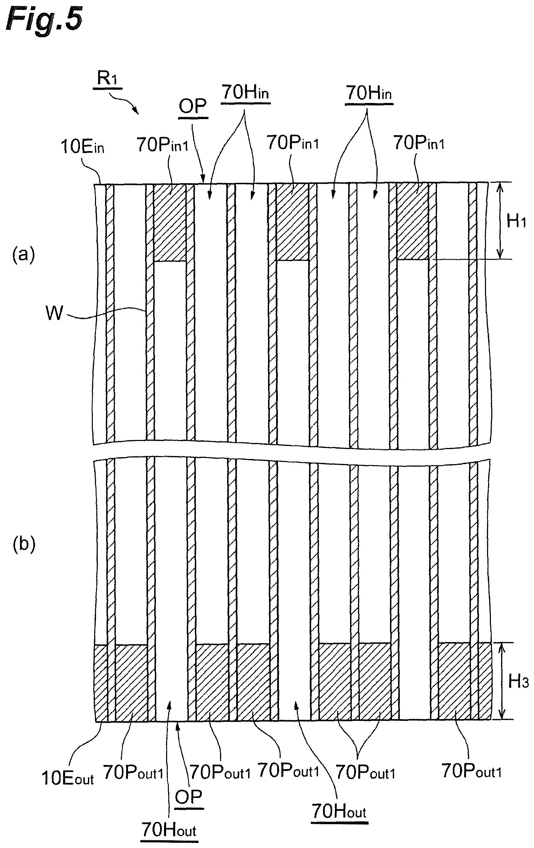

[Figure 5] The (a) of Figure 5 is a cross-section view of the central part (first region R₁) of the honeycomb filter in Figure 1 and Figure 2 on a Va plane that is near the inlet-side end face 10Eᵢₙ and that is parallel to the axis, and the (b) of Figure 5 is a cross-section view of the central part (first region R₁) of the honeycomb filter in Figure 1 and Figure 4 on a Vb plane that is near the outlet-side end face 10Eₒᵤₜ and that is parallel to the axis.

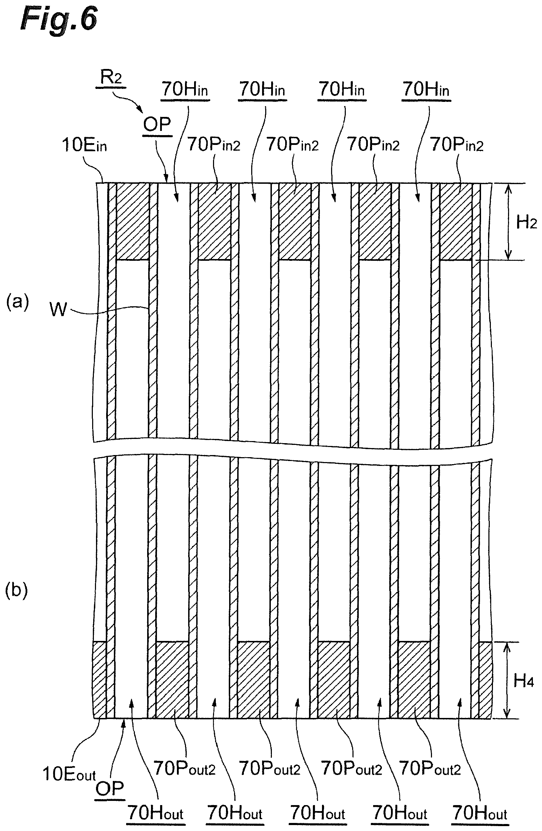

[Figure 6] The (a) of Figure 6 is a cross-section view of the peripheral part (second region R₂) of the honeycomb filter in Figure 1 and Figure 2 on a VIa plane that is near the inlet-side end face 10Eᵢₙ and that is parallel to the axis, and the (b) of Figure 6 is a cross-section view of the peripheral part (second region R₂) of the honeycomb filter in Figure 1 and Figure 4 on a VIb plane that is near the outlet-side end face 10Eₒᵤₜ and that is parallel to the axis.

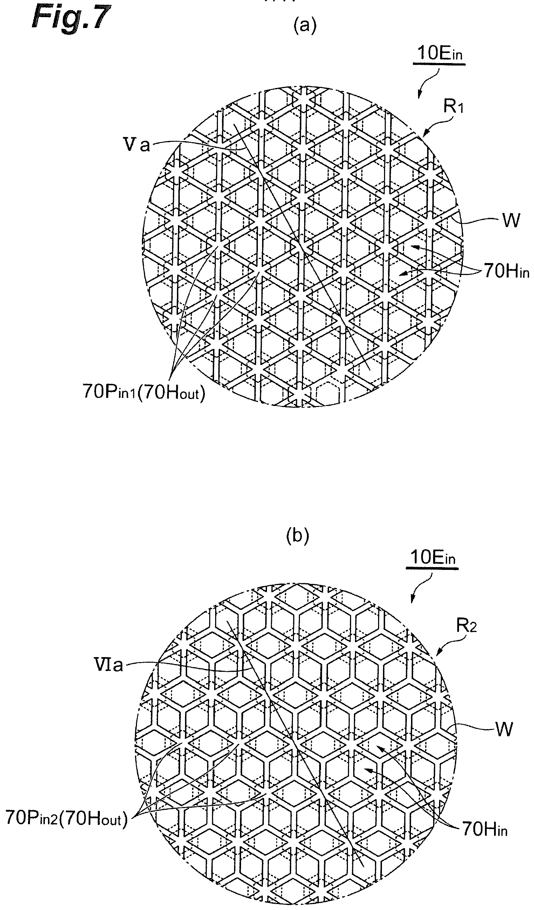

[Figure 7] The (a) of Figure 7 is a diagram of an inlet-side end face of a central part (first region R₁) of a honeycomb filter according to a second embodiment, and the (b) of Figure 7 is a diagram of an inlet-side end face of a peripheral part (second region R₂) of the honeycomb filter according to the second embodiment.

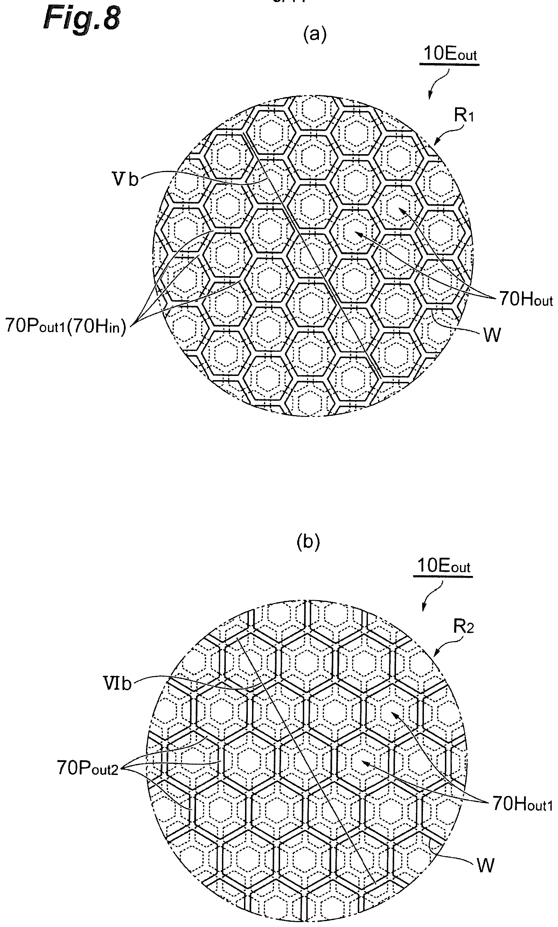

[Figure 8] The (a) of Figure 8 is a diagram of an outlet-side end face of the central part (first region R₁) of the honeycomb filter according to the second embodiment, and the (b) of Figure 8 is a diagram of an outlet-side end face of the peripheral part (second region R₂) of the honeycomb filter according to the second embodiment.

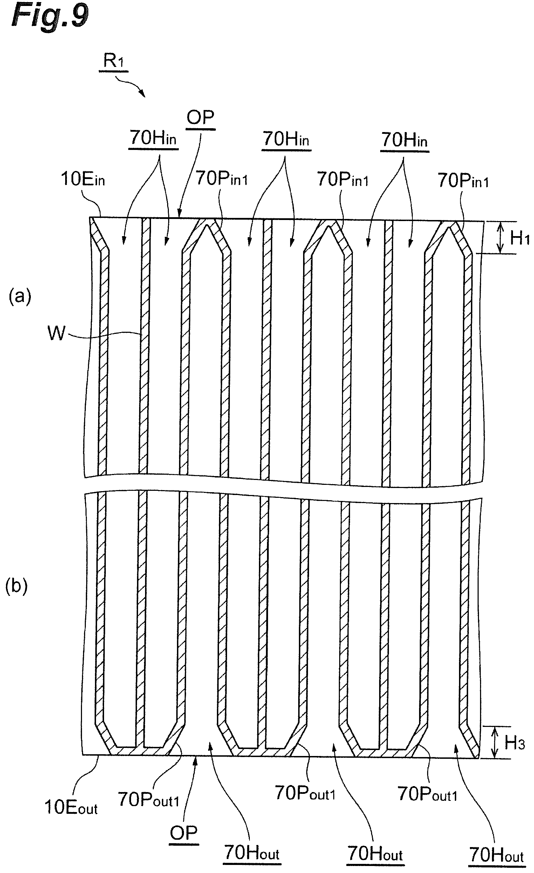

[Figure 9] The (a) of Figure 9 is a cross-section view of the central part (first region R₁) of the honeycomb filter in the second embodiment on a Va plane (see Figure 7: corresponding to the Va plane in Figure 1) that is near the inlet-side end face and that is parallel to the axis, and the (b) of Figure 9 is a cross-section view of the central part (first region R₁) of the honeycomb filter in the second embodiment on a Vb plane (see
Figure 8: corresponding to the Vb plane in Figure 1) that is near the outlet-side end face and that is parallel to the axis.
[Figure 10] The (a) of Figure 10 is a cross-section view of the peripheral part (second region R₂) of the honeycomb filter in the second embodiment on a VIa plane (see Figure 7: corresponding to the VIa plane in Figure 1) that is near the inlet-side end face and that is parallel to the axis, and the (b) of Figure 10 is a cross-section view of the peripheral part (second region R₂) of the honeycomb filter in the second embodiment on a VIb plane (see Figure 8: corresponding to the VIb plane in Figure 1) that is near the outlet-side end face and that is parallel to the axis.
[Figure 11] Figure 11 is a schematic view showing an example of a production process for the honeycomb filter in the second embodiment.

### Description of Embodiments

A first embodiment of the present invention will be described with reference to the drawings.

### (First Embodiment)

A honeycomb filter 100 according to the embodiment includes a cylindrical body 10 shown in Figure 1. The cylindrical body 10 includes an inlet-side end face 10Eᵢₙ and an outlet-side end face 10Eₒᵤₜ. The cylindrical body 10 includes a central part (first region) R₁ that contains the central axis of the cylindrical body 10, and a peripheral part (second region) R₂ that is a circular part around the central part R₁ of the cylindrical body 10, and between these regions, the arrangements of inlet-side flow passages 70Hᵢₙ including open parts on the inlet-side end face 10Eᵢₙ and outlet-side flow passages 70Hₒᵤₜ including open parts on the outlet-side end face 10Eₒᵤₜ are different from each other.

The (a) and (b) of Figure 2 are diagrams of inlet-side end faces of the central parts R₁ and peripheral part R₂ of the cylindrical body 10, respectively. The (a) and (b) of Figure 3 are cross-section views of axis-directional central parts of the central part R₁ and peripheral part R₂ of the cylindrical body 10, respectively. The (a) and (b) of Figure 4 are diagrams of outlet-side end faces of the central part R₁ and peripheral part R₂ of the cylindrical body 10, respectively. Figure 5 is a cross-section view of the central part R₁ that is parallel to the axis of the cylindrical body 10. Figure 6 is a cross-section view of the peripheral part R₂ that is parallel to the axis of the cylindrical body 10.

As shown in Figure 5 and Figure 6, each of the central part R₁ and the peripheral part R₂ includes many inlet-side flow passages 70Hᵢₙ and outlet-side flow passages 70Hₒᵤₜ. The directions in which the flow passages extend are parallel to each other, and coincide with the longitudinal direction of the columnar body, and this direction is the axis direction.

As shown in Figure 5, at the central part R₁, the inlet-side flow passages 70Hᵢₙ each include closed parts 70Pₒᵤₜ₁ on the outlet-side end face 10Eₒᵤₜ and include open parts OP on the inlet-side end face 10Eᵢₙ, and the outlet-side flow passages 70Hₒᵤₜ each include closed parts 70Pᵢₙ₁ on the inlet-side end face 10Eᵢₙ and include open parts OP on the outlet-side end face 10Eₒᵤₜ.

As shown in Figure 6, at the peripheral part R₂, the inlet-side flow passages 70Hᵢₙ each include closed parts 70Pₒᵤₜ₂ on the outlet-side end face 10Eₒᵤₜ and include open parts OP on the inlet-side end face 10Eᵢₙ, and the outlet-side flow passages 70Hₒᵤₜ each include closed parts 70Pᵢₙ₂ on the inlet-side end face 10Eᵢₙ and include open parts OP on the outlet-side end face 10Eₒᵤₜ.

In the embodiment, each closed part is a column-shaped body that is plugged into the flow passage. Here, the height of the closed part 70Pᵢₙ₁ is defined as H₁, and the height of the closed part 70Pᵢₙ₂ is defined as H₂.

In the honeycomb filter, adjacent flow passages are partitioned by a partition wall W, and through the partition wall W, the passing of gas is possible between the flow passages.

As shown in Figure 2 to Figure 4, in the inlet-side flow passage 70Hᵢₙ and the outlet-side flow passage 70Hₒᵤₜ, the cross-sections are hexagons. In the embodiment, at each of the central part R₁ and the peripheral part R₂, six flow passages are adjacent around one flow passage. Then, in the embodiment, at the central part R₁, to one inlet-side flow passage Hᵢₙ, three outlet-side flow passages Hₒᵤₜ and three other inlet-side flow passages Hᵢₙ are adjacent. Further, at the peripheral part R₂, to one inlet-side flow passage Hᵢₙ, two outlet-side flow passages Hₒᵤₜ and four other inlet-side flow passages Hᵢₙ are adjacent.

Here, in the specification, "two flow passages are adjacent" means that two flow passages are partitioned through one partition wall in the thickness direction of the partition wall. Two flow passages that are positioned with a diagonal relation in a so-called square flow passage arrangement are not flow passages that are adjacent to each other.

Here, the number of outlet-side flow passages Hₒᵤₜ that are adjacent to one inlet-side flow passage Hᵢₙ at the central part R₁ is defined as Nᵢₒ₁, the number of other inlet-side flow passages Hᵢₙ that are adjacent to one inlet-side flow passage Hᵢₙ at the central part R₁ is defined as Nᵢᵢ₁, the number of outlet-side flow passages Hₒᵤₜ that are adjacent to one inlet-side flow passage Hᵢₙ at the peripheral part R₂ is defined as Nᵢₒ₂, and the number of other inlet-side flow passages Hᵢₙ that are adjacent to one inlet-side flow passage Hᵢₙ at the peripheral part R₂ is defined as Nᵢᵢ₂. In the embodiment, as is obvious from Figure 2 and the like, Nᵢₒ₁ = 3, Nᵢᵢ₁ = 3, Nᵢₒ₂ = 2 and Nᵢᵢ₂ = 4 hold.

In the (a) of Figure 2, parts where the closed parts 70Pᵢₙ₁ are visible at the central part R₁ correspond to the outlet-side flow passages 70Hₒᵤₜ. On the other hand, in the (b) of Figure 2, parts where the closed parts 70Pᵢₙ₂ are visible at the peripheral part R₂ correspond to the outlet-side flow passages 70Hₒₛₜ. In the (a) of Figure 4, parts where the closed parts 70Pₒᵤₜ₁ are visible at the central part R₁ correspond to the inlet-side flow passages 70Hᵢₙ. On the other hand, in the (b) of Figure 4, parts where the closed parts 70Pₒᵤₜ₂ are visible at the peripheral part R₂ correspond to the inlet-side flow passages 70Hᵢₙ.

In the embodiment, as shown in Figure 4, at each of the central part R₁ and the peripheral part R₂, the outlet-side flow passage 70Hₒᵤₜ is not adjacent to other outlet-side flow passages 70Hₒᵤₜ and is adjacent to only inlet-side flow passages 70Hᵢₙ.

It is possible that the area of the axis-perpendicular cross-section of a region resulting from adding the central part (first region) R₁ and the peripheral part (second region) R₂ is 80% or greater of the area of the axis-perpendicular cross-section of the cylindrical body 10, and it is preferable to be 85% or greater, and it is more preferable to be 90% or greater. Here, in the calculation of the area of each region, not only the cross-section areas of the flow passages but also the cross-section areas of the partition walls among the flow passages are included. However, the cross-section areas of parts that are on the border between the regions and that do not accord with the arrangement rules for the regions, and the cross-section areas of parts where the cross-section shapes are influenced by the external wall are excluded.

The area of the central part (first region) R₁ / the area of the peripheral part (second region) R₂ can be 0.25 to 4.

As described above, in the embodiment, the shape of the axis-perpendicular cross-section of at least any one of the inlet-side flow passage 70Hᵢₙ and the outlet-side flow passage 70Hₒᵤₜ is a regular hexagon, at least in the central part of the honeycomb filter in the axis direction (hereinafter, referred to as the axis-directional central part). A regular hexagonal flow passage among various polygonal flow passages, in the case where the Reynolds number for which the representative length is the square root of the flow passage cross-section area is identical between flow passages to be compared, has the smallest fluid friction coefficient, and therefore the cross-section shape being a regular hexagon contributes to the reduction in pressure loss. Particularly, the case where the cross-section area of the outlet-side flow passage 70Hₒᵤₜ is a regular hexagon and where the cross-section areas of the six adjacent inlet-side flow passages 70Hᵢₙ is smaller than the cross-section area of the outlet-side flow passage 70Hₒᵤₜ is preferable, because it is possible to increase the filtration area and to decrease the pressure loss when soot has accumulated.

Here, although the illustration is omitted, the cylindrical body 10 includes an external wall, and a plurality of both-end closed flow passages are arranged between the external side of the peripheral part R₂ and the external wall. The both-end closed flow passages each include closed parts on the inlet-side end face 10Eᵢₙ and include closed parts on the outlet-side end face 10Eₒᵤₜ. The both-end closed flow passages can be formed at part where the cross-section shapes are influenced by the external wall.

The material of the cylindrical body is a porous ceramic. Examples of the ceramic include aluminum titanate, silicon carbide and cordierite. The aluminum titanate can contain magnesium, silicon or the like.

Such a honeycomb filter can be produced by the following method. First, the extrusion molding of molding raw material is performed by an extrusion molding machine, and the obtained molded body is dried as necessary and thereafter is cut into a predetermined length, so that a honeycomb molded body having the cross-section shape shown in the (a) and (b) of Figure 3 is produced. The honeycomb molded body includes many through-holes with a hexagonal cross-section.

The composition of the molding raw material only needs to be a composition that provides a porous ceramic after the firing. For example, it is possible to contain a ceramic raw material, an organic binder, a pore-forming agent, a solvent, and additives that are added as necessary.

The ceramic raw material is a powder containing elements that compose the ceramic. The binder can be an organic binder, and examples thereof include celluloses such as methylcellulose, carboxymethylcellulose, hydroxyalkyl methylcellulose, and sodium carboxymethylcellulose; alcohols such as polyvinyl alcohol; and lignosulfonates. Examples of the additive include lubricant, plasticizer and dispersant.

Thereafter, one end of each through-hole is closed such that the inlet-side flow passages 70Hᵢₙ and the outlet-side flow passages 70Hₒᵤₜ each are arranged at the central part R₁ and peripheral part R₂ of the honeycomb molded body as described above, and thereafter, the closed honeycomb molded body is fired. Thereby, the honeycomb filter 100 according to the embodiment is obtained. Further, before the firing, the honeycomb molded body may be dried.

According to the embodiment, the central part R₁ is configured as Nᵢₒ₁ = 3 and Nᵢᵢ₁ = 3 while the peripheral part R₂ is configured as Nᵢₒ₂ = 2 and Nᵢᵢ₂ = 4, and the number of outlet-side flow passages 70Hₒᵤₜ that are adjacent to one inlet-side flow passage 70Hᵢₙ decreases at the peripheral part R₂, compared to the central part R₁. Therefore, the passing resistance of the gas that goes from the inlet side toward the outlet side rises at the peripheral part R₂, compared to the central part R₁. Accordingly, the gas flow is controlled such that the flow of the gas is concentrated on the central part R₁, compared to the peripheral part R₂. In this case, for example, it is possible to control the combustion behavior and the temperature distribution at the time of regeneration, by suppressing the heat removal by gas at the outer circumference part at the time of regeneration or the like, or by collecting carbon particles selectively at the central part.

Further, since the outlet-side flow passages 70Hₒᵤₜ are not adjacent to each other at the central part R₁ and the peripheral part R₂, the partition walls W forming the outlet-side flow passages 70Hₒᵤₜ can effectively function as filtration walls. When the outlet-side flow passages 70Hₒᵤₜ are adjacent to each other, the partition walls partitioning the outlet-side flow passages 70Hₒᵤₜ cannot function as filters, and therefore, the efficiency is reduced.

Further, in the embodiment, the both-end closed flow passage is not included at the central part R₁ and the peripheral part R₂, and therefore, it is possible to utilize the filter volume effectively.

The height H₁ of the closed part at the central part R₁ on the inlet-side end face 10Eᵢₙ and the height H₂ of the closed part at the peripheral part R₂ on the inlet-side end face 10Eᵢₙ, which are shown in Figure 5 and Figure 6, may be identical to each other, but may be different from each other. Further, the respective heights H₁ of the closed parts at the central part R₁ on the inlet-side end face 10Eᵢₙ may be identical to each other, or may be different from each other. Furthermore, the respective heights H₂ of the closed parts at the peripheral part R₂ on the inlet-side end face 10Eᵢₙ may be identical to each other, or may be different from each other. On this occasion, by making the heights different, it is possible to differentiate the flowing way of gas. Similarly, the height H₃ of the closed part at the central part R₁ on the outlet-side end face 10Eₒᵤₜ and the height H₄ of the closed part at the peripheral part R₂ on the outlet-side end face 10Eₒᵤₜ may be identical to each other, but may be different from each other. Further, the respective heights H₃ of the closed parts at the central part R₁ on the outlet-side end face 10Eₒᵤₜ may be identical to each other, or may be different from each other. Furthermore, the respective heights H₄ of the closed parts at the peripheral part R₂ on the outlet-side end face 10Eₒᵤₜ may be identical to each other, or may be different from each other.

### (Second Embodiment)

Subsequently, a honeycomb filter according to a second embodiment will be described with reference to Figure 7 to Figure 10. In the embodiment, only the structure of both end faces is different, and therefore, only this will be described.

In the honeycomb filter according to the second embodiment, the cross-section shape in the axis-directional central part is the same as the first embodiment (see Figure 3), and therefore, the Nᵢₒ₁ and Nᵢᵢ₁ at the central part R₁ and the Nᵢₒ₂ and Nᵢᵢ₂ at the peripheral part R₂ each are the same as the first embodiment.

As shown in Figure 7 to Figure 10, in the honeycomb filter according to the second embodiment, the column-shaped bodies are not arranged in the flow passages, and the partition walls W themselves are transformed so that the closed parts 70Pᵢₙ₁, 70Pᵢₙ₂, 70Pₒᵤₜ₁, 70Pₒᵤt₂ are formed. On both end faces of the columnar body, the cross-section areas of non-closed flow passages that are adjacent to closed flow passages are increased at the open parts OP, compared to the cross-section areas of the axis-directional central parts of the respective flow passages. Here, in Figure 7 and Figure 8, the shapes of the cross-sections of the flow passages in the axis-directional central part are described by dotted lines.

For example, as shown in the (a) of Figure 7 and the (a) of Figure 9, at the central part R₁ on the inlet-side end face 10Eᵢₙ, the outlet-side flow passage 70Hₒᵤₜ is closed by the closed part 70Pᵢₙ₁, and the closed part 70Pᵢₙ₁ expands the cross-section area at the open part OP of the inlet-side flow passage 70Hᵢₙ adjacent to the outlet-side flow passage 70Hₒᵤₜ, compared to the cross-section area of the axis-directional central part.

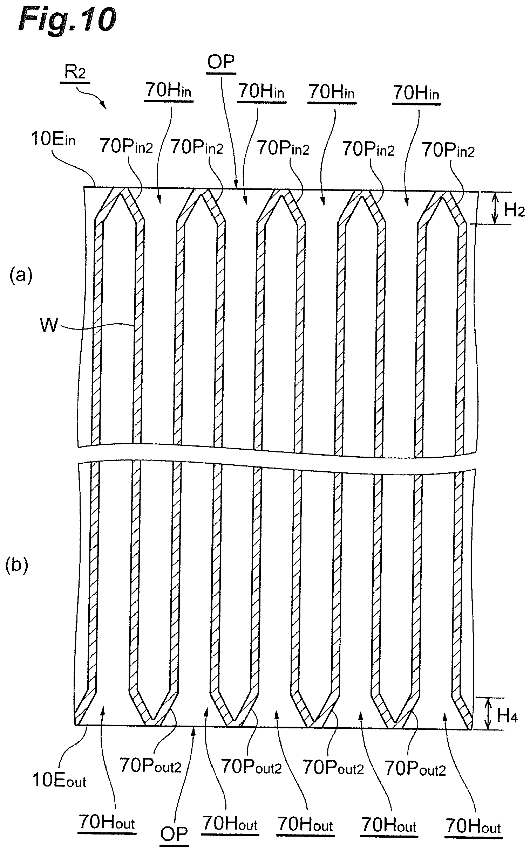

As shown in the (b) of Figure 7 and the (a) of Figure 10, at the peripheral part R₂ on the inlet-side end face 10Eᵢₙ, the outlet-side flow passage 70Hₒᵤₜ is closed by the closed part 70Pᵢₙ₂, and the closed part 70Pᵢₙ₂ expands the cross-section area at the open part OP of the inlet-side flow passage 70Hᵢₙ adjacent to the outlet-side flow passage 70Hₒᵤₜ, compared to the cross-section area of the axis-directional central part.

Further, as shown in the (a) of Figure 8 and the (b) of Figure 9, at the central part R₁ on the outlet-side end face 10Eₒᵤₜ, the inlet-side flow passage 70Hᵢₙ is closed by the closed part 70Pₒᵤₜ₁, and the closed part 70Pₒᵤₜ₁ expands the cross-section area at the open part OP of the outlet-side flow passage 70Hₒᵤₜ adjacent to the inlet-side flow passage 70Hᵢₙ, compared to the cross-section area of the axis-directional central part.

As shown in the (b) of Figure 8 and the (b) of Figure 10, at the peripheral part R₂ on the outlet-side end face 10Eₒᵤₜ, the inlet-side flow passage 70Hᵢₙ is closed by the closed part 70Pₒᵤₜ₂, and the closed part 70Pₒᵤₜ₂ expands the cross-section area at the open part OP of the outlet-side flow passage 70Hₒᵤₜ adjacent to the inlet-side flow passage 70Hᵢₙ, compared to the cross-section area of the axis-directional central part.

The embodiment also includes the same Nᵢₒ₁, Nᵢᵢ₁, Nᵢₒ₂ and Nᵢᵢ₂ as the first embodiment, and therefore, the passing resistance of gas rises at the peripheral part R₂, compared to the central part R₁. Accordingly, the control of the gas flow is possible between the central part R₁ and the peripheral part R₂.

Further, since the outlet-side flow passages 70Hₒᵤₜ are not adjacent to each other in the axis-directional central parts of the central part R₁ and the peripheral part R₂, the partition walls forming the outlet-side flow passages 70Hₒᵤₜ can effectively function as filtration walls.

Such a honeycomb filter can be produced by the following method. First, the extrusion molding of molding raw material is performed by an extrusion molding machine, and the obtained molded body is dried as necessary and thereafter is cut into a predetermined length, so that a honeycomb molded body having the cross-section shape shown in Figure 2 is produced. The honeycomb molded body includes unclosed inlet-side flow passages 70Hᵢₙ and unclosed outlet-side flow passages 70Hₒᵤₜ, in a state in which each is pierced.

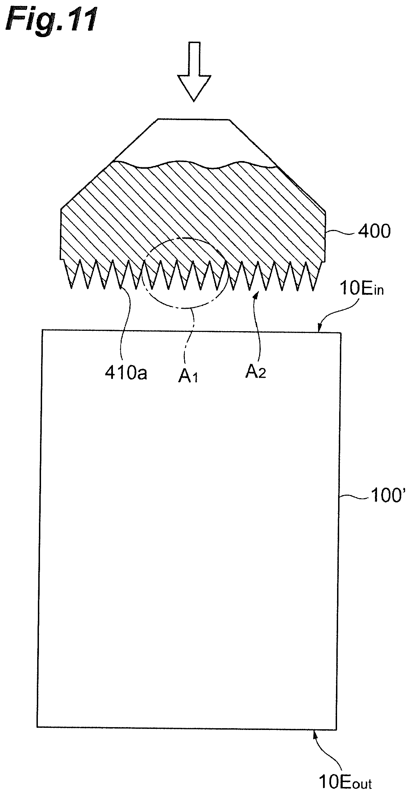

Subsequently, as shown in Figure 11, the outlet-side flow passages 70Hₒᵤₜ are closed on the inlet-side end face 10Eᵢₙ of the obtained unfired honeycomb molded body 100'. Specifically, a closing jig 400 including many conic protrusions 410a is prepared. It is possible to include triangular-pyramid-shaped protrusions corresponding to the central part R₁, at the center A₁ of the closing jig 400, and to include rhombic-pyramid-shaped protrusions corresponding to the peripheral part R₂, at the periphery A₂. Then, the closing jig 400 is moved such that each protrusion 410a enters the inlet-side flow passage 70Hᵢₙ. Thereby, the partition walls of the inlet-side flow passage 70Hᵢₙ are transformed, and the cross-section area of the flow passage is enlarged, while the cross-section area of the outlet-side flow passage 70Hₒᵤₜ is reduced. Then, eventually, as shown in Figure 7 to Figure 10, the cross-section shape of the inlet-side flow passage 70Hᵢₙ becomes a triangle at the central part R₁ and becomes a rhomboid at the peripheral part, and the outlet-side flow passage 70Hₒᵤₜ is closed while the partition walls are completely crimped to each other. Here, a vibration or an ultrasonic wave may be given to the closing jig 400.

Next, similarly, the inlet-side flow passages 70Hᵢₙ on the outlet-side end face 10Eₒᵤₜ are closed with another closing jig. The protrusions of the closing jig that are inserted into the outlet-side flow passages 70H_{out,} for example, can have a hexagonal pyramid shape. Thereafter, the honeycomb molded body 100' in which both end faces are closed is fired, and thereby, the honeycomb filter 100 according to the embodiment is obtained. Further, before the firing, the honeycomb molded body may be dried.

The present invention is not limited to the above embodiments, and various modified modes are possible.

For example, in the above embodiments, the central part R₁ is configured as Nᵢₒ₁ = 3 and Nᵢᵢ₁ = 3, and the peripheral part R₂ is configured as Nᵢₒ₂ = 2 and Nᵢᵢ₂ = 4. However, by interchanging the arrangement between the central part and the peripheral part, it is possible to adopt Nᵢₒ₁ - 2 and Nᵢᵢ₁ = 4 for the central part R₁ and to adopt Nᵢₒ₂ = 3 and Nᵢᵢ₂ = 3 for the peripheral part R₂. In this case, the passing resistance of gas decreases at the peripheral part R₂, compared to the central part R₁. Accordingly, the gas flow is controlled such that the flow of gas is concentrated on the peripheral part R₂, compared to the central part R₁. In this case, for example, it is possible to increase the generation of combustion heat at the peripheral part, at the time of regeneration, by supplying a high-temperature gas selectively to the outer circumference part at the time of regeneration or the like, or by collecting carbon particles selectively at the peripheral part.

Further, as long as Nᵢₒ₂ ≠ Nᵢₒ₁ holds, the values of Nᵢₒ₁ and Nᵢₒ₂ are not particularly limited if being any natural numbers.

Furthermore, in the above embodiments, Nᵢₒ₁ ≠ Nᵢₒ₂ holds, between the central part R₁ as the first region and the peripheral part R₂ as the second region, but the present invention is not limited this. For example, the right half of the filter cross-section may be adopted as the first region R₁, and the left half may be adopted as the second region R₂. The positions and shapes of the two regions (R₁ and R₂) can be appropriately changed depending on the intended use, use method, regeneration method and others of the filter. Also, it is possible to set three or more regions.

For satisfying Nᵢₒ₁ ≠ Nᵢₒ₂ between the first region and the second region, it is only necessary to close a honeycomb molded body in which through-holes are uniformly arranged, at different positions for each region. Here, the positional relation between the inlet-side flow passages and the outlet-side flow passages changes by changing the closing positions, and therefore, Nᵢₒ₁+Nᵢᵢ₁ = Nᵢₒ₂₊Nᵢᵢ₂ holds. Accordingly, when Nᵢₒ₁ ≠ Nᵢₒ₂ holds, Nᵢᵢ₁ ≠ Nᵢᵢ₂ holds. In the above embodiments, as is obvious from Nᵢₒ₁+Nᵢᵢ₁ = Nᵢₒ₂+Nᵢᵢ₂ = 6, it is preferable that the number of other flow passages adjacent to one flow passage in the axis-directional central part be 6. However, Nᵢₒ₁+Nᵢᵢ₁ = Nᵢₒ₂+Nᵢᵢ₂ ≠ 6 is also possible.

Further, although the first embodiment is a mode in which all closed parts include the column-shaped bodies and the second embodiment is a mode in which all closed parts enlarge the cross-section areas of the adjacent flow passages, the two modes may be mixed.

Further, it is possible that, when the inter-centroid distance between the centroid of the open part shape of the outlet-side flow passage and the centroid of the open part shape of the closest other outlet-side flow passage to the outlet-side flow passage is P1 (for example, see Figure 4) and the inter-centroid distance between the centroid of the open part shape of the outlet-side flow passage and the centroid of the open part shape of the second-closest other outlet-side flow passage to the outlet-side flow passage is P₂, P2 / P1 is less than 2, at each of the first region R₁ and the second region R₂ on the outlet-side end face. If P2 / P1 is 2 or greater, this indicates that the outlet-side flow passages are too far, and in some cases, the total cross-section area of the outlet-side flow passages becomes small so that the pressure loss increases.

In the above first and second embodiments, P2 / P1 = 1.7321 holds.

Further, it is preferable that P1/the hydraulic equivalent diameter DH of the outlet-side flow passage be less than 3.5 at each of the first region and the second region. The hydraulic equivalent diameter is 4 x (flow-passage cross-section area) / (flow-passage wetted perimeter). The above ratio exceeding 3.5 indicates that the outlet-side flow passage is relatively small, and in some cases, the pressure loss increases. In the case where the outlet-side flow passage has a plurality of hydraulic equivalent diameters, it is only necessary to use the average hydraulic equivalent diameter. In the above first and second embodiments, P1 / DH is in a range of P1 / DH = 1.29 to 3.25, at each of the first region and the second region.

Further, it is preferable that the total number of the inlet-side flow passages / the total number of the outlet-side flow passages be greater than 1 at each of the first region and the second region. In the case where the above ratio is 1, a checker pattern in the so-called square arrangement is formed, but in the case of being greater than 1, it is possible to make the total cross-section area of the inlet-side flow passages greater than the total cross-section area of the outlet-side flow passages, and the volume in which particles in the filter can be collected increases. In the above first and second embodiments, the above ratio is 2 at the first region, and the above ratio is 3 at the second region.

Further, the honeycomb filter may be another columnar body (for example, a rectangular column or an elliptic column), instead of a cylindrical body. The number and diameter of the flow passages also are not particularly limited, the cross-section shape of each flow passage also is not limited to a hexagon, and the arrangement of the flow passages and the like also are not limited to the above embodiments. The cell density, for example, can be 100 to 800 cpsi, and preferably, 200 to 600 cpsi.

### Examples

Honeycomb filters in Examples 1, 2 and Comparative Example 1 were produced.

### (Example 1)

Filter size: A cylinder with an outer diameter of 5.66 inches and a length of 6 inches

Arrangement of flow passage: Six flow passages (hexagon) were adjacent around each one flow passage (hexagon) through the partition walls. Nᵢₒ₁ = 2 and Nᵢᵢ₁ = 4 at the central part R₁ (within the radius of 0.75R), Nᵢₒ₂ = 3 and Nᵢᵢ₂ = 3 at the peripheral part R₂ (beyond the radius of 0.75R), P2 / P1 = 1.73, P1 / DH = 2.44 at the central part R₁, P1 / DH = 1.88 at the peripheral part R₂, and the ratio of the area of the axis-perpendicular cross-section of the region resulting from adding the central part R₁ and the peripheral part R₂ with respect to the total cross-section area of the honeycomb filter = 0.929
Material: Porous aluminum titanate

### (Example 2)

Arrangement of flow passage: Nᵢₒ₁ = 3 and Nᵢᵢ₁ = 3 at the central part R₁ (within the radius of 0.75R), Nᵢₒ₂ = 2 and Nᵢᵢ₂ = 4 at the peripheral part R₂ (beyond the radius of 0.75R): the same as Figure 2 to Figure 6, P1 / DH = 1.88 at the central part R₁, P1 / DH = 2.44 at the peripheral part R₂, and the ratio of the area of the axis-perpendicular cross-section of the region resulting from adding the central part R₁ and the peripheral part R₂ with respect to the total cross-section area of the honeycomb filter = 0.899

The others were the same as Example 1.

### (Comparative Example 1)

Arrangement of flow passage: Nᵢₒ₂ = 3 and Nᵢᵢ₂ = 3 in the whole, P1 / DH at the central part R₁ = 1.88, P1 / DH at the peripheral part R₂ = 1.88, and the ratio of the area of the axis-perpendicular cross-section of the region resulting from adding the central part R₁ and the peripheral part R₂ with respect to the total cross-section area of the honeycomb filter = 0.938

The others were the same as Example 1.

### (Measurement of Pressure Loss Due to Deposited Soot)

Soot was deposited in each filter, at a soot generation rate of 10 g / h, at a gas flow rate of 250 kg / h and at a gas temperature of 240 °C, and the pressure loss when 8 g / L of soot was deposited in each filter was measured. The deposition amount of soot was calculated by measuring the filter weights before and after the deposition of soot. Each pressure loss when the pressure loss in Comparative Example 1 is defined as 1 is shown in Table 1.

### (Regeneration Experiment 1 for Filter)

After about 8 to 9 g / L of soot was deposited in each filter as described above, a gas flow rate of about 105 kg / h and a gas temperature of about 680°C were kept for 510 seconds, and the soot was combusted. Then, the change in the soot deposition amount before and after the regeneration (combustion) was divided by the soot deposition amount before the regeneration, and thereby, the regeneration efficiency was evaluated. Further, thermocouples were inserted at a position of 25 mm from the outlet-side end face of the filter, at intervals of 1.75 cm from the central axis, and thereby, the maximum temperature gradient at the time of the regeneration was measured. The result is shown in Table 1.

### (Regeneration Experiment 2 for Filter)

After about 13g of soot was deposited in each filter as described above, first, the temperature was raised at a gas flow rate of about 105 kg / h and at about 30°C / min. During the temperature rise, at the time point when the pressure loss became 95% of the maximum value measured until that time, the condition was changed to a gas flow rate of about 50 kg / h and a gas temperature of about 150°C and was kept for 420 seconds. Thereafter, the regeneration efficiency and the maximum temperature gradient were measured, similarly to the above description.

**[Table 1]**

| | | Example 1 | Example 2 | Comparative Example 1 |
|---|---|---|---|---|
| Pressure loss at the time of soot deposition of 8 g/L | | 1.11 | 1.11 | 1 |
| Regeneration Experiment 1 | Soot deposition amount (g-soot/L) | 8.1 | 8.1 | 8.5 |
| | Regeneration efficiency (%) | 87.0 | 87.0 | 87.6 |
| | Maximum temperature gradient (°C/cm) | 96.1 | 98.4 | 117.3 |
| Regeneration Experiment 2 | Soot deposition amount (g-soot/L) | 12.5 | 12.9 | 12.9 |
| | Regeneration efficiency (%) | 57.7 | 56.9 | 52.0 |
| | Maximum temperature gradient (°C/cm) | 295.8 | 323.1 | 355.5 |

### Reference Signs List

10Eᵢₙ ... inlet-side end face, 10Eₒᵤₜ ... outlet-side end face, 70Hᵢₙ ... inlet-side flow passage, 70Hₒᵤₜ ... outlet-side flow passage, 10 ... cylindrical body (columnar body), 100 ... honeycomb filter, R₁ ... central part (first region), R₂ ... peripheral part (second region)

## Claims

1. A honeycomb filter comprising a porous columnar body including an inlet-side end face, an outlet-side end face, a plurality of inlet-side flow passages and a plurality of outlet-side flow passages, the plurality of the inlet-side flow passages including open parts on the inlet-side end face and including closed parts on the outlet-side end face, the plurality of the outlet-side flow passages including open parts on the outlet-side end face and including closed parts on the inlet-side end face, wherein
a central part of the columnar body in an axis direction parallel to the inlet-side flow passage and the outlet-side flow passage includes a first region and a second region, the first region being a region where the number of outlet-side flow passages adjacent to each inlet-side flow passage is Nᵢₒ₁ (Nᵢₒ₁ is any natural number), the second region being a region where the number of outlet-side flow passages adjacent to each inlet-side flow passage is Nᵢₒ₂ (Nᵢₒ₂ is any natural number) and Nᵢₒ₂ ≠ Nᵢₒ₁ is satisfied,
the outlet-side flow passage being not adjacent to another outlet-side flow passage, at the first region and the second region in the central part of the columnar body in the axis direction.

2. The honeycomb filter according to claim 1, wherein, when an inter-centroid distance between a centroid of an open part shape of the outlet-side flow passage and a centroid of an open part shape of a closest other outlet-side flow passage to the outlet-side flow passage is P1 and an inter-centroid distance between the centroid of the open part shape of the outlet-side flow passage and a centroid of an open part shape of a second-closest other outlet-side flow passage to the outlet-side flow passage is P2, P2 / P1 is less than 2, at each of the first region and the second region on the outlet-side end face.

3. The honeycomb filter according to claim 1 or 2, wherein the total number of the inlet-side flow passages / the total number of the outlet-side flow passages is greater than 1, at each of the first region and the second region.

4. The honeycomb filter according to any one of claims 1 to 3, wherein a shape of at least any one of cross-sections of the inlet-side flow passage and the outlet-side flow passage is a regular hexagon, at each of the first region and the second region in the central part of the columnar body in the axis direction, the cross-sections being perpendicular to the axis.

5. The honeycomb filter according to any one of claims 1 to 4, wherein each of the first region and the second region does not include a flow passage that is closed on both of the inlet-side end face and the outlet-side end face.

6. The honeycomb filter according to any one of claims 1 to 5, wherein an area of a cross-section of a region resulting from adding the first region and the second region occupies 80% or greater of a total cross-section area of the honeycomb filter, the cross-section being perpendicular to the axis.

7. The honeycomb filter according to any one of claims 1 to 6, wherein the closed parts of the inlet-side flow passage and the outlet-side flow passage each include column-shaped bodies that are plugged into the flow passages.

8. The honeycomb filter according to any one of claims 1 to 6, wherein cross-section areas of the open parts of the inlet-side flow passage and the outlet-side flow passage on both end faces of the columnar body each are greater compared to cross-section areas in the axis-directional central part.

9. The honeycomb filter according to any one of claims 1 to 8, wherein the first region contains a central axis of the columnar body, and the second region surrounds the first region, the central axis being parallel to the inlet-side flow passage and the outlet-side flow passage.
